# NEUE EUROPÄISCHE PATENTSCHRIFT

(11) **EP 0 264 539 B2**
(45) Veröffentlichungstag und Bekanntmachung des Hinweises auf die Entscheidung über den Einspruch: **18.12.1996**
(45) Hinweis auf die Patenterteilung: 04.03.1992
(21) Anmeldenummer: 87107865.5
(22) Anmeldetag: 30.05.1987
(51) Int. Cl.: B60C 9/18

(54) **Gürtelreifen für Fahrzeuge**
Belted tyre for vehicles
Pneumatique à ceinture pour véhicule

(30) Priorität: 18.10.1986 DE 3635491
(43) Veröffentlichungstag der Anmeldung: 27.04.1988
(73) Patentinhaber: Janus, Jonny, D-40210 Düsseldorf (DE)
(72) Erfinder: Janus, Jonny, D-40210 Düsseldorf (DE)
(74) Vertreter: Türk, Gille, Hrabal, Leifert

(56) Entgegenhaltungen:
- EP-A- 0 191 124
- DE-A- 1 680 489
- FR-A- 1 290 231
- FR-A- 1 299 622
- FR-A- 2 351 811
- GB-A- 359 917

## Beschreibung

Die Erfindung betrifft einen Gürtelreifen für Fahrzeuge gemäß dem Oberbegriff des Patentanspruches 1, wie aus EP-A-0 191 124 bekannt.

Bei der herkömmlichen Konstruktion von Gürtelreifen besteht die Gürtellage aus einem in mehreren Lagen übereinander kreuzweise angeordneten Cordgewebematerial, vorzugsweise aus dünnen Stahlfäden. wobei, bedingt durch diesen Aufbau sich das eingesetzte Material mit sehr kurzen Schnittlängen diagonal erstreckt. Mit dieser konstruktiven Anordnung soll der Gürtel gleichzeitig umfangssteif und quersteif gemacht werden. Diese beiden Kriterien entscheiden tatsächlich über die fahrdynamischen Qualitäten von Gürtelreifen. d.h. Umfangssteife ohne ausreichende Quersteife ist nicht akzeptabel. Hieraus ergibt sich bezogen auf die 0° -Richtung (Umfang) für die Cord-Gewebelage ein Winkel um ca. 25 ° bzw. ca. 335°. In dieser Beziehung hat die herkömmliche Gürtelkonstruktion einen anerkannt hohen Standard erreicht. Dabei ergibt es sich. daß die einzelnen Corde nur wenig länger sind als der Gürtel breit ist und damit nur eine verhältnismäßig kleine Haftungsfläche zum umgebenden Gummimaterial verfügbar ist, die zur Einleitung der zu übertragenden Kräfte benötigt wird.

Das in mehreren Lagen übereinander angeordnete Cordgewebe ist mit Kautschuk- bzw. Gummimaterial ummantelt, so daß sich als Nebenprodukt insgesamt eine unverhältnismäßig große Querschnittsdicke der mehrschichtigen Gürtellage mit unerwünscht hoher Radialsteife ergibt, die der notwendigen Abplattung des Reifens im Aufstandsbereich sehr großen Verformungswiderstand entgegensetzt. Teilweise versucht man die Schwachpunkte dieser Konstruktion durch zusätzliche Abdeckungen aus Nylon- oder Stahlcord in 0° -Lage zu verdecken, d.h. der kreuzweise aufgebaute Stahlgürtel erhält z.B. eine Schuiterbandage, um diesen konzeptbedingten Schwachpunkt zu stützen.

In Verbindung mit einem hohen Luftdruck plattet ein derartiger Gürtelreifen kaum noch richtig ab, so daß zwar die Pressungsverteilung recht gleichmäßig erfolgt, und die Ausbildung eines Drucktales reduziert werden kann. aber die geringe Abplattungslänge reicht nicht mehr aus. um bei gegebener Reifenbreite genügend Aufstandsfläche zur Übertragung der fahrdynamischen Kräfte zur Verfügung zu stellen bzw. ausreichenden Komfort zu bieten. So ergibt sich der bekannte Zwang, den Reifen zu verbreitern. um die benötigte Aufstandsfläche zu schaffen. Da dies optisch gut wirkt, läßt sich diese Not als Tugend verkaufen. Dieser konstruktive Weg führt aber nicht nur zu eingeschränktem Komfort. spezifisch großer innerer Arbeit. großer Aquaplaning-Gefahr und größerem Luftwiderstand, sondern auch zu übermäßigem Einsatz von teurem und in den Resourcen beschränktem Material, hohem Gewicht und hohen Kosten. Beispiele vorbekannter Reifen sind aus der DE-B 1 194 720, der DE-U-1 701 521, und der GB-B 359 917 zu entnehmen.

Bei einem weiteren bekannten Gürtelreifen (DE-A 23 55 489) besteht die im Laufflächenbereich eingebettete, als Gürtellage dienende Versteifungseinlage aus einem Band aus hochfestem homogenen Werkstoff. das zu einem endlosen Ring mit geschlossenen Seitenkanten ausgebildet ist, der über seinen gesamten Umfang mit gegeneinander abgeschlossenen Durchbrechungen versehen ist. Die Durchbrechungen sind in mehreren über die axiale Breite des Bandes aufeinsnderfolgenden Reihen nebeneinander angeordnet. Hierdurch soll eine einfach herzustellende gürtelartige Versteifungseinlage mit vergleichsweise geringem Materialaufwand und ohne wesentliche Gewichtszunahme bei Erhaltung der durchgehenden haftenden Bindung zwischen dem Karkassenteil und den auf die Gürtellage aufgebrachten Laufflächenteilen des Reifens erreicht werden.

Ein Gürtelreifen mit einer derartigen Versteifungseinlage kann sich jedoch den Fahrbahnunebenheiten, insbesondere beim Überfahren von Querwellen. in seiner Querrichtung nicht ausreichend anpassen. Sein Gürtel wirkt wie ein Fremdkörper in der elastischen Gummikonstruktion und führt wegen ungenügender Haftung an Kautschuk und der durch die intensive mechanische Arbeit entstehenden Abfallwärme zu Ablösungen im Reifen, die ein totales Versagen zur Folge haben. Ein weiterer wesentlicher Nachteil besteht darin. daß die Gürtellage in dieser Form völlig starr und daher nicht imstande ist. die in begrenztem Umfange notwendigen Dehn- bzw. Stauchbewegungen in Umfangsrichtung auszuführen.

Es ist zwar weiterhin ein Gürtelreifen für Fahrzeuge bekannt (DE-A 27 22 923), bei dem der Gürtel zur Laufflächenstabilisierung mehrere getrennte koaxiale Bänder aufweist. die axial voneinander durch Bereiche getrennt sind. welche bei seitlichen Kräften auf die Lauffläche eine lokale Laufflächendeformation zulassen. Hierdurch soll ein Reifen geschaffen werden. dessen Lauffläche insbesondere bei Unedenheiten einen besseren Bodenkontakt hat. Bei diesem bekannten Reifen besteht jeder des koaxial nebenein ander angeorcheten Bänder oder jeder Ring aus feinen Stahlcordfäden, so daß flexible aber in Umfangsrichtung des Reifens im wesentlichen undehnbare Bänder gebildet werden. die nach dem dem Cordfaden typischen Strecken eine radiale Größenzunahme des belasteten Reifens begrenzen. Von drei nebeneinander angeordneten Bändern weisen die beiden äußeren Bänder jeweils ein in der Nähe der jeweiligen Reifenschulter um 180° gefaltetes Band auf, während das mittlere Band aus zwei paralleln, übereinander liegenden Drahtlagen besteht und keine Faltung aufweist.

Wenn auch durch eine derartige Ausgestaltung der Versteifungseinlagen des Reifens bereits eine Anpassung der einzelnen Ringe der Gürtellage beim Überfahren von Fahrbahnunebenheiten erreicht wird, so haben diese bekannten Gürtellagen bzw. Bänder aus feinen Stahlcordfäden doch eine verhältnismäßig große Gesamtquerschnittsdicke, wodurch sich ein hohes Trägheitsmoment ergibt und die Abrolleigenschaften und insbesondere der Rollwiderstand des Reifens nachteilig beeinflußt werden. Außerdem verfügt diese Ausführungsform nicht über die notwendige Quersteife.

Bei allen bekannten Gürtelreifen liegt ein weiteres Problem darin, daß das elastische Reifenmaterial im Bereich der Schulter beim Fahren konstruktionsbedingt wesentlich stärker als im mittleren Bereich der Lauffläche beansprucht wird, weil die Gürtelkanten infolge der ständig ihre Position wechselnden Abplattung des Reifens im Schulterbereich starke Scherbewegungen ausüben. Dem werden außerdem noch Zentrifugalbelastungen aus Teilen der Reifenflanken überlagert. Diese hohe Belastung der Reifenschultern führt zu Temperaturerhöhungen, die örtlich weit über 180°C liegen können, so daß der Gummi des Reifens in diesen Bereichen zerstört wird und sich von den Schulterbereichen ausgehend vom Gummi abzulösen beginnt. Der die Karkasse im Bereich der Lauffläche abstützende Gürtel kann die Reifenschulter nicht ausreichend abstützen, da die Gürtelränder den aus dem Laufflächenbereich in die Flanken übergehenden Reifenschultern nicht folgen können (vgl. hierzu DE-A 31 39 770 sowie DE-A 27 15 724).

Bei allen vorbekannten Gürtelreifen ergibt sich ein weiteres Problem der Beanspruchung und erhöhten Erwärmung dadurch, daß die Gürteleinlage im Bereich der durch Abplattung gebildeten Aufstandsfläche aus einer Zugspannung in eine Druckspannung wechselt, also gestaucht wird. Dem Fachmann sind in diesem Zusammenhang die Ausbildung von "Drucktälern", die einer ausgeglichenen Pressungsverteilung entgegenstehen, bekannt. Dadurch ergeben sich nicht nur unkontrollierbare Verformungen und damit verschleißfördernde Gleitungen im Aufstandsbereich des Gürtelreifens mit ungleichmäßigem Verschleiß (z.B. Mittenabrieb), sondern auch ein verhältnismäßig hoher Rollwiderstand des laufenden Reifens. Dies führt wiederum zu verstärkter Erwärmung und damit reduzierter Lebensdauer und Betriebssicherheit.

Der Erfindung liegt die Aufgabe zugrunde, einen Gürtelreifen zu schaffen, der bei leichter Bauweise sowohl die notwendige Umfangssteife als auch die notwendige Quersteife hat und einen hohen Fahrkomfort bei geringem Rollwiderstand bietet.

Diese Aufgabe wird erfindungsgemäß bei einem Reifen der eingangs genannten Gattung mit den Merkmalen des Anspruches 1 gelöst. Vorteilhatte Ausgestaltungen der Erfindung sind Gegenstand der Unteransprüche.

Durch die Erfindung werden die bekannten Gürtelreifen derart verbessert, daß ein Konstruktionselement des Gürtel optimal auf die Erzielung der benötigten Umfangssteife und ein weiteres Konstruktionselement des Gürtels zur Sicherstellung der unverzichtbaren Quersteife ausgelegt ist und beide Elemente sich gegenseitig ergänzend zu einem neuartigen Gürtel zusammenwirken. Auf diese Weise wird der teure Kompromiß der herkömmlich konstruierten Gürtelreifen - nämlich die hohe Radialsteife - vermieden. Die neuartige Kombination sich ergänzender Elemente reduziert unter Vermeidung der schädlichen Wirkung beim Wechsel von Zugspannung in Druckspannung in der Aufstandssehne des Gürtelreifens die innere Arbeit, sorgt für eine gleichmäßige Pressungsverteilung, ermöglicht die Verwendung leichterer - mit Kautschuk besser verbindbarer - Materialien und senkt Gewicht und Kosten des Gürtelreifens.

Es ist bekannt (EP-A-0 191 124), bei einem Gürtelreifen den Gürtel aus mehreren nebeneinander angeordneten geschlossenen Ringen oder Bändern, die sich in Umfangsrichtung des Gürtelreifens erstrecken, zu bilden. Dabei ist der Gürtel so ausgebildet, daß er unter dem Einfluß des Luftdruckes des aufgeblasenen Reifens sich zusammen mit dem Gummimaterial des Reifens um ein Maß in Umfangsrichtung dehnt, welches dem Ausmaß der normalen Abplattung des Reifens im Bereich seiner Aufstandsfläche entspricht.

Allerdings gehen bei dieser Konstruktion Verbesserungen bezüglich der Erhöhung der Umfangssteifigkeit zu Lasten der Quersteife, wodurch der Rollwiderstand des Reifens steigt und der Fahrkomfort sinkt.

Es ist weiter bekannt ( GB-A-359 917 ), den Laufstreifen von Diagonalreifen mit Verstärkungselementen, die als Durchdringungssperre wirken, zu versehen. Diese Verstärkungselemente tragen aber nicht zu einer Erhöhung der Quersteife des Reifens bei.

Die Umfangstörung durch die Abplattung des Reifens bleibt, wie Schnellauf-Versuche bis 280 km/h erwiesen haben, weitgehend auf die Aufstandsfläche beschränkt, so daß sich störende Rollwülste, stehende Wellen und eine Vergrößerung des Radius im nicht belasteten Umfangsteil weitgehend vermeiden lassen. Die Gürteleinlage und die sie umgebende Gummischicht werden gemäß dem idealen Funktionsprinzip des pneumatischen Systems möglichst nur so unter Zugspannungen betrieben, daß kaum schädliche Druckspannungen in diesem System auftreten.

Unter diesen Prämissen stellt die Erfindung eine neue technische Lehre im Reifenbau dar und steht im Gegensatz zur heute gültigen technischen Lehre, gemäß welcher der Gürtel so steif wie möglich sein soll (um bei dem drohenden Spannungswechsel Unterschiede in der Pressungsverteilung auszugleichen) und die Verwendung von Thermoplasten im Reifenbau nicht möglich ist.

Gemäß einer bevorzugten Ausführungsform der Erfindung werden die die Gürteleinlage bildenden Gürtelelemente beim Aufblasen des Reifens mit Luft und die betriebsbedingte Zentrifugalkraft unter Zugspannung gesetzt, so daß sie bei der einsetzenden begrenzten Dehnung Energie speichern. Bildlich kann man sich dies wie die Arbeit einer durch einen Anschlag begrenzten Feder vorstellen, die sich beim Durchlaufen der Aufstandssehne des Reifens aus eigener Energie zusammenzieht und danach wieder streckt. Bei der sich im Aufstandsbereich des Reifens ergebenden Abplattung geben die Festigkeitsträger des Umfangsgürtels zusammen mit dem umgebenden Gummimaterial die gespeicherte Energie wieder frei, so daß für die Längenanpassung (Verformung) des größeren Kreisbogenausschnitts zur kleineren Aufstandssehne faktisch keine äußere Energie zugeführt werden muß und die Umfangsstörung praktisch auf den Aufstand beschränkt bleibt. Dabei werden die Festigkeitsträger nur etwa bis in den spannungslosen Zustand zurückgestellt, so daß die Gürtelelemente im Betrieb im allgemeinen nicht gestaucht werden können. Die Gürteleinlage ist im Bereich des Laufreifens so gestreckt, daß in Umfangsrichtung fast keine störenden Dehnbewegungen mehr möglich sind. Das die Gürteleinlage umgebende Gummimaterial des Reifens steht aufgrund der Streckung der Gürteleinlage ebenfalls unter Zugspannung. Im Bereich der Abplattung werden dementsprechend nicht nur die Gürtelelemente, sondern auch das dieselben umgebende Gummimaterial mehr oder weniger stark in den ursprünglichen spannungsfreien Zustand zurückgestellt, so daß die Gürteleinlage im Bereich der Abplattung nicht den Verformungswiderstand des Gummis überwinden muß, d.h. hier findet die begrenzte Rückformung des Gummis nicht gegen, sondern mit den Festigkeitsträgern statt. Durch diese Art der Verformung ergibt sich eine deutliche Verringerung des Rollwiderstandes des Gürtelreifens im Betrieb. Vergleichende Temperatur-Messungen haben beim Serien-Stahlgürtel im Schulterbereich 185°, bei dem erfindungsgemäßen Kombi-Gürtel dagegen nur 100° ergeben. Die Verminderung des Rollwiderstandes kann noch dadurch verstärkt werden, daß die Gürtelelemente mit ihrem seitlichen Profil so hergestellt werden, wie dies der später im Abplattungsbereich auftretenden Rückformung (spannungslos) etwa entspricht. Auch in diesem Falle bewirkt die Betriebsspannung des Gürtelreifens die gewünschte Streckung oder Dehnung der Gürteleinlage sowie des diese umgebenden Gummimaterials des Laufstreifens. Der sowieso erforderliche Betriebsdruck im Reifen sowie die Zentrifugalkraft werden also zusätzlich als Energiespender genutzt, um den Rollwiderstand zu verringern.

Die besonderen Vorzüge der Erfindung werden, allgemein gesprochen, dadurch erreicht, daß man den Gürtel aus zwei Elementen aufbaut, nämlich einem Umfangsgürtel für die Umfangskräfte und einem Quergürtel für die Querkräfte, die beide so ausgelegt sind, daß sie auch noch Kräfte, für die das andere Gürtelelement bestimmt ist, in erheblichem Ausmaß aufnehmen können.

Durch die Erfindung wird der Rollwiderstand des Reifens durch Reduzierung der Verformungsarbeit im Abplattungsbereich auch dadurch verringert, daß die verformbaren Komponenten des Reifens, d.h. die Gürtelelemente und das Gummimaterial, "Rückformungsaufgaben" erhalten, die der Größe der im Abplattungsbereich des Reifens durch den Betriebsdruck erzeugten Material-Vorspannung und/oder Konstruktions-Dehnung, Material-Dehnung entsprechen. Dadurch werden unkontrollierbare Materialverformungen, die zu Verzerrungen der Lauffläche des Reifens führen, vermieden.

Durch die ringförmige - also in Umfangsrichtung verlaufende - Anordnung der Festigkeitsträger des Umfangsgürtels können infolge der besseren Ausnützung ihres Festigkeitspotentials auch dünnere und leichtere, textile oder synthetische Faser-Corde verwendet werden. Durch diese Materialien und die Querschnittsreduzierung lassen sich die Radialsteife, das Gewicht und die Kosten weiter senken.

Vorteilhaft ist, daß das gesamte Material des Umfangsgürtels ausschließlich nur zur Aufnahme der entstehenden Ringzugkräfte eingesetzt wird. Der sonst übliche Materialaufwand für in Diagonalrichtung verlaufenden Festigkeitsträgern entfällt völlig, da deren Funktion durch die radialen Cordfadenschlingen der Karkasse insbesondere aber durch den Quergürtel erfüllt wird.

Für die Ringe oder Bänder der Umfangs-Gürtellage können alle geeigneten Materialien, insbesondere hochzugfeste Stahllegierungen, aber auch Kohlenstoff-Fasern, textile Corde oder dergleichen verwendet werden.

Der gesamte Gürtel weist im Umfangsgürtel eine Anzahl von im seitlichen Abstand nebeneinander verlaufenden Festigkeitsträgern auf und ferner im Quergürtel wenigstens ein im wesentlichen rechtwinklig verlaufendes, sich etwa über die Breite der Aufstandsfläche des Luftreifens erstreckendes Queraussteifelement, das aufgrund seiner Scheiberwirkung ein Winkelspektrum von 0° bis 90° bzw. 360° bis 270° abdeckt. Die Festigkeitsträger des Umfangsgürtels können dabei beispielsweise in der sog. Null-Grad-Lage angeordnet sein, d.h. sich in Umfangsrichtung des Gürtelreifens erstrecken. Der Gürtel besteht also sozusagen aus zwei Konstruktionselementen, nämlich dem Umfangsgürtel und dem Quergürtel.

Die Festigkeitsträger des Quergürtels können sich sowohl über als auch unter den Festigkeitsträgern des Umfangsgürtels im Reifenmaterial befinden.

Beispielsweise besteht der Quergürtel aus wenigstens einer in Umfangsrichtung des Luftreifens ringförmig gelegten Kunststoff-Folie, die quer zu den Festigkeitsträgern des Umfangsgürtels gewellt ist. Eine derartige Einlage ist zwar in Umfangsrichtung des derart ausgestatteten Reifens flexibel und trägt somit praktisch nicht zur Umfangsfestigkeit bei, vermittelt dem Reifen aber wegen des hohen Widerstandsmomentes in Querrichtung eine sehr hohe Quersteifigkeit.

Das Queraussteifelement kann dabei aus einem einzigen, aber ebenso aus mehreren ringförmig nebeneinander angeordneten, in das Material des Reifenkörpers eingebetteten gewellten Bändern bestehen. Auch eine Einlage aus mehreren nebeneinander angeordneten Bändern verleiht dem Luftreifen eine hohe Quersteifigkeit, so daß man die Festigkeitsträger des Umfangsgürtels in Null-Grad-Lage anordnen und dementsprechend deren Festigkeitseigenschaften voll ausnutzen kann. Dementsprechend braucht der Umfangsgürtel zum Erreichen der notwendigen Quersteifigkeit nicht überdimensioniert zu werden.

Gemäß einer praktischen Ausführungsform der Erfindung sind die Festigkeitsträger des Quergürtels dünne und schmale Bänder oder Streifen endlicher Länge, die sich etwa in Querrichtung erstrecken und in gegenseitigem Abstand über den Umfang des Gürtelreifens verteilt derart in diesem angeordnet sind, daß sie ihm eine hohe Steifigkeit in Querrichtung bei gleichzeitiger Biegsamkeit bzw. Flexibilität in Umfangsrichtung verleihen.

Vorzugsweise bestehen die band- oder streifenförmigen Festigkeitsträger des Quergürtels aus einer Kunststoff-Folie, die in einer Ebene verläuft oder auch gewellt bzw. gekrümmt sein kann. Auch ist es möglich, in diesen band- oder streifenförmigen Festigkeitsträgern Löcher vorzusehen, in welche das Kautschuk- bzw. Gummimaterial des Luftreifens eindringt, um zusätzlich zu der beim Vulkanisieren des Reifens entstehenden Verschweißung zwischen Kautschuk bzw. Gummi und Kunststoff-Folie eine formschlüssige Verbindung herzustellen. In jedem Falle findet aber eine derart intensive Verschweißung zwischen dem Kunststoff der Festigkeitsträger des Quergürtels und dem diese umgebenden Gummi statt, daß bei Versagen bzw. bei Überbeanspruchung des Luftreifens nur ein cohäsiver Bruch in dem Gummimaterial stattfindet, die Haftung zwischen den Festigkeitsträgern und den diese umgebenden Gummischichten hingegen unbeschädigt bleibt. Zweckmäßig bestehen die Festigkeitsträger des Quergürtels aus einem Kunststoffmaterial, welches ein ähnliches oder sogar gleiches spezifisches Gewicht wie das Gummimaterial des Luftreifens hat, so daß der Quergürtel keine Unwuchten hervorruft, sondern sich sozusagen gewichtsneutral in das Gummimaterial des erfindungsgemäßen Luftreifens integrieren läßt.

Ein besonders geeignetes Material für die Kunststoff-Folie, aus der die erfindungsgemäßen Festigkeitsträger des Quergürtels ausgeschnitten, ausgestanzt oder sonstwie hergestellt werden, ist Poly-(2,6-dimethyl-1,4-phenylenäther) bzw. eine dieses Material enthaltende Legierung. Dieses Material hat ein dem im Reifenbau verwendeten Gummi sehr ähnliches spezifisches Gewicht und verbindet sich über ein Styrol-haltiges Milieu bzw. SBR enthaltendes Kautschukmaterial - wie Versuch bewiesen haben - beim Vulkanisieren des Reifens mit dem Kautschuk- und Gummimaterial selbst dann äußerst fest und dauerhaft durch eine gegenseitige Verschweißung, wenn die Oberfläche der aus diesem Material bestehenden, in den Reifen eingelegten Festigkeitsträger glatt ist und keine Aufrauhungen, Unebenheiten oder Löcher enthält. Vielmehr findet bei der Vulkanisationstemperatur eine intensive und innige Verschweißung zwischen Kunststoff und Gummimaterial statt.

Durch die Erfindung wird einem Gürtelreifen, dessen Umfangsgürtel eine unzureichende Quersteifigkeit hat, beispielsweise wenn dessen Festigkeitsträger in Null-Grad-Richtung verlaufen, durch Hinzufügen eines neuartigen Quergürtels einfach und zweckmäßig sowohl die gewünschte Umfangssteifigkeit als auch eine hohe Quersteifigkeit verliehen, so daß er gute Fahreigenschaften, einen geringen Rollwiderstand, geringere innere Arbeit und geringe Verschleißneigung wegen der nur linearen Dehnungen bzw. Verkürzungen bei der Umfangsarbeit zeigt. Außerdem verringert sich die zu verformende Masse des Gürtels und damit dessen Gewicht erheblich. Hinzu kommt, daß die erfindungsgemäß einzubauenden band- oder streifenförmigen, in das Gummimaterial des Luftreifens eingebetteten Festigkeitsträger des Quergürtels eine elastische Durchdringungssperre für Fremdkörper wie Nägel od. dgl. bilden, welche durch die Lauffläche in den Luftreifen eindringen.

In der Zeichnung sind Ausführungsbeispiele des erfindungsgemäß ausgestalteten Gürtelreifens für Fahrzeuge schematisch dargestellt, und zwar zeigt
- Figur 1: einen Querschnitt durch einen derartigen Reifen, in welchem Quergürtel und Umfangsgürtel zur deutlichen Darstellung besonders hervorgehoben sind,
- Figur 2: eine schaubildliche Teilansicht der Festigkeitsträger des Umfangsgürtels und des Quergürtels nach einer Ausführungsform der Erfindung,
- Figur 3: eine schaubildliche Teilansicht eines aus drei parallelen gewellten Bändern gebildeten Quergürtels nach einer anderen Ausführungsform der Erfindung,
- Figur 4: eine Draufsicht auf den Umfangsgürtel und drei im parallelen Abstand nebeneinander angeordnete, sich in Querrichtung erstreckende Festigkeitsträger des Quergürtels nach einer weiteren Ausführungsform der Erfindung,
- Figur 5 und 6: Draufsichten ähnlich wie in Fig. 4 auf anders gestaltete Festigkeitsträger des Quergürtels,
- Figur 7 und 8: Teilschnitte, aus denen verschiedene Anordnungen und Ausbildungen der Festigkeitsträger des Quergürtels gemäß Fig. 4 bis 6 gegenüber den in Null-Grad-Lage bzw. Umfangsrichtung des Reifens verlaufenden Festigkeitsträgern des Umfangsgürtels zu erkennen sind, und
- Figur 9: eine schematische Seitenansicht des Umfangsgürtels im Aufstandsbereich, woraus das Verhalten der Festigkeitsträger des Umfangsgürtels zu erkennen ist.

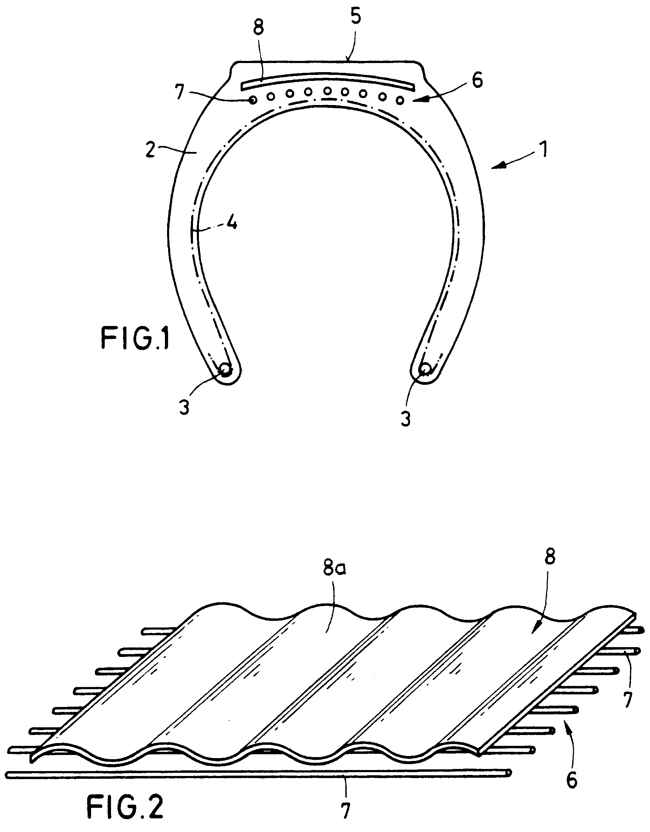

Der in Figur 1 dargestellte Luftreifen (1) hat einen im Querschnitt torusförmigen Körper (2), der im wesentlichen aus vulkanisiertem Kautschuk bzw. Kautschukmaterial, d.h. also aus Gummi bzw. Gummimaterial, besteht. In die beiden Wulste des Luftreifens (1), welche an der nicht dargestellten Felge eines Fahrzeugrades nach der Montage anliegen, befinden sich in Umfangsrichtung verlaufende Wulstringe (3). Zwischen diesen Wulstringen erstreckt sich im torusförmigen Körper (2) nahe der Innenseite des Luftreifens eine zur Stabilisierung vorgesehene Cord-Einlage (4) der Karkasse, die beliebiger bekannter Ausführung sein kann.

Im Bereich der äußeren Lauffläche (5) des Luftreifens (1) ist in das Gummimaterial des Körpers (2) ein Umfangsgürtel (6) eingebettet. Dieser Umfangsgürtel (6) wird von in der sogenannten Null-Grad-Lage angeordneten bzw. sich in Umfangsrichtung des Luftreifens (1) erstreckenden, im gegenseitigen Abstand nebeneinander angeordneten Festigkeitsträgern (7), die textile Corde, synthetische Fäden oder auch Metalldrähte sein können, gebildet. Auf einer Seite der Festigkeitsträger (7) des Umfangsgürtels (6) sind im Abstand von denselben Festigkeitsträger (8a) eines Quergürtels (8) angeordnet. Sowohl die Festigkeitsträger (7) als auch die Festigkeitsträger (8a) sind vollständig in das Gummimaterial des Körpers (2) eingebettet und mit diesem innig verbunden.

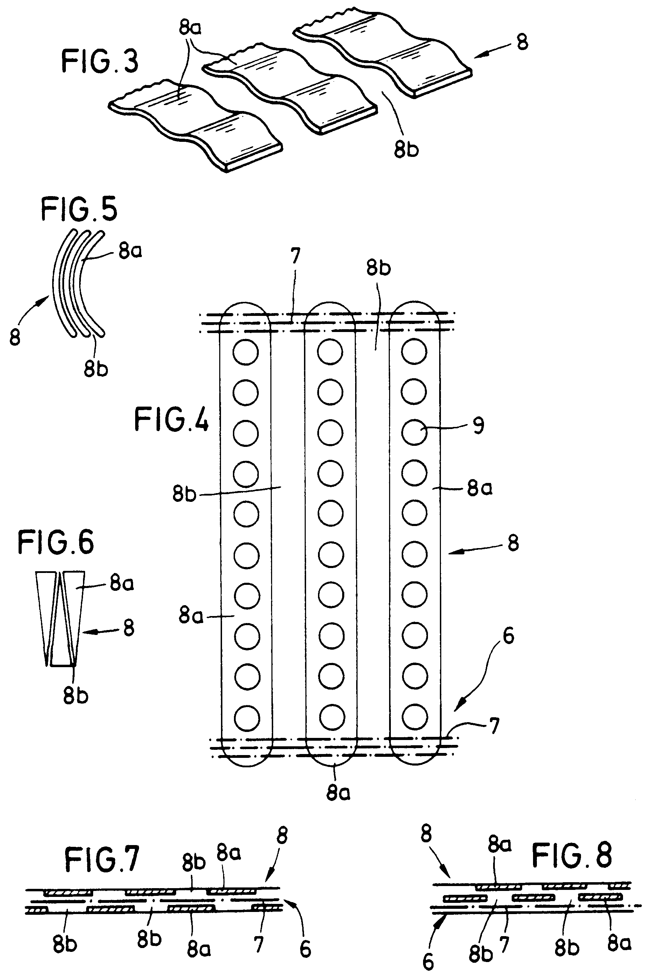

Gemäß Figur 2 besteht der Festigkeitsträger des Quergürtels (8) aus einer sich über die Breite des Umfangsgürtels (6) erstreckenden und in Umfangsrichtung des Luftreifens (1) verlaufenden Kunststoff-Folie, die sozusagen parallel zu den Festigkeitsträgern (7) des Umfangsgürtels (6) verläuft und quer zu denselben gewellt ist. Die Folie kann auch in mehrere parallel zueinander verlaufende, entsprechend gewellte Bänder (8a) unterteilt sein, wie Figur 3 zeigt.

Gemäß Figur 4 bis 6 sind die Festigkeitsträger des Quergürtels (8) schmale längliche Streifen oder Bänder, die sich über die Breite des Reifens (1) und damit quer zu den in den Körper (2) eingearbeiteten zahlreichen Festigkeitsträgern (7) des Umfangsgürtels (6) erstrecken. In Figur 4 sind nur die in den Endbereichen der Festigkeitsträger des Quergürtels (8) befindlichen Festigkeitsträger (7) des Umfangsgürtels (6) gezeigt, d.h. die zwischen den in den Rändbereichen des Umfangsgürtels befindlichen Festigkeitsträgern (7) vorgesehenen weiteren Festigkeitsträger sind aus Gründen der einfacheren Darstellung weggelassen.

In Figur 4 ist gezeigt, daß die band- oder streifenförmigen Festigkeitsträger des Quergürtels (8), die aus einer dünnen Kunststoff-Folie bestehen, mit einer Anzahl von Löchern (9) versehen sind, die einen Durchtritt des Kautschuk- oder Gummimaterials des Körpers (2) ermöglichen. Diese Löcher (9) sind aber in vielen Fällen nicht erforderlich.

Bei der Ausführungsform gemäß Fig. 5 sind die Festigkeitsträger (8a) des Quergürtels (8) sichelförmig, bei der Ausführungsform gemäß Fig. 6 keilförmig ausgebildet.

Bei der Ausführungsform gemäß Figur 7 sind sowohl oberhalb als auch unter(7) des Umfangsgürtels (6) streifenförmige halb der Festigkeitsträger Festigkeitsträger eines Quergürtels angeordnet, und zwar derart, daß die Festigkeitsträger der beiden Lagen des Quergürtels (8) sozusagen auf Lükke gegeneinander versetzt sind und sich lediglich in ihren Kantenbereichen teilweise überlappen. Kräfte werden zwischen den einzelnen Festigkeitsträgern (8a) über kurze Gummibrücken (8b) übertragen, die sich im wesentlichen rechtwinklig zu den Festigkeitsträgern (7) des Umfangsgürtels (6) erstrecken. Durch diese Überlappungen der Quergürtel-Festigkeitsträger (8a) und die dazwischen befindlichen Gummi-Brücken (8b) erhöht sich die Quersteifigkeit.

Bei der Ausführungsform gemäß Figur 8 sind die Festigkeitsträger (8a) des Quergürtels (8) zwar ebenfalls in zwei Lagen und gegeneinander versetzt bei teilweiser Überlappung in den Randbereichen angeordnet, jedoch befinden sich beide Lagen des Quergürtels (8) auf einer Seite der Festigkeitsträger (7) des Umfangsgürtels (6).

In jedem Fall werden bei dieser Anordnung auch die Festigkeitsträger (7) des Umfangsgürtels (6) infolge der durch sie erzeugten Scheibenwirkung bzw. einer resultierenden Längenänderung (der sie Widerstand entgegensetzen) zur Erhöhung der Seitensteifigkeit mit herangezogen.

Die aussteifende Wirkung der Festigkeitsträger (8a) in Querrichtung wird bei den Ausführungsformen gemäß Figur 7 und 8 von der Schub-Scherung der Gummischicht der zwischen den in den beiden Lagen versetzt und sich teilweise überlappend angeordneten streifenförmigen Festigkeitsträgern unterstützt, so daß etwa die Wirkung einer Panzerkette erzielt wird. In Umfangsrichtung des Gürtelreifens (1) verhalten sich die Festigkeitsträger des Quergürtels (8) im Zusammenwirken mit dem zwischen ihnen befindlichen Gummimaterial ausreichend flexibel.

Bei der Ausführungsform gemäß Figur 2 - und ähnlich auch bei der Ausführungsform gemäß Figur 3 - ergibt sich die hohe Aussteifung gegen quer angreifende Kräfte aus der geometrischen Profilierung der gewellten Kunststoff-Folie (8a), die gegen Verwerten geschützt ist, weil sie zwischen der auf den Luftreifen einwirkenden Radlast und der Fahrbahn sozusagen im Reifenmaterial eingespannt ist. Dabei wird sie von den unter einer Rest-Zugspannung stehenden Festigkeitsträgern (7) des Umfangsgürtels (6) gestützt. Die Wellenform der Kunststoff-Folie soll so gewählt sein, daß sich bei der Dehnung des begrenzt dehnbaren Umfangsgürtels (6) keine Spannungsspitzen in der zur Queraussteifung dienenden Kunststoff-Folie (8a) ergeben.

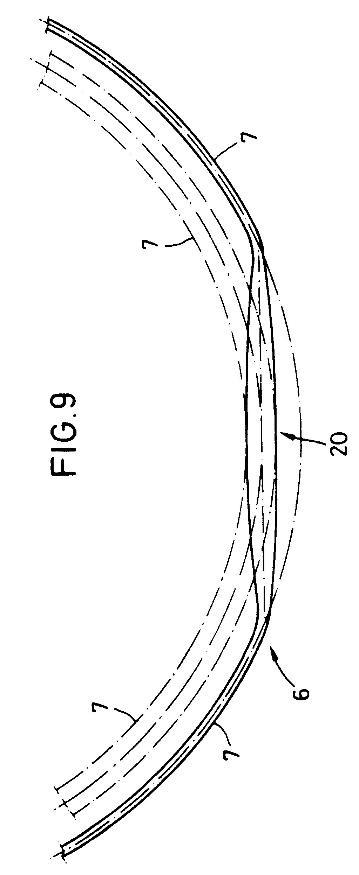

Figur 9 zeigt, daß die Festigkeitsträger (7) des Umfangsgürtels (6) in Längsrichtung dehnbar sind. Beim Aufblasen des Gürtelreifens (1) werden sie aus der in strichpunktierten Linien angedeuteten Position aufgeweitet bzw. gedehnt, so daß sie einen größeren Durchmesser erhalten. Die Dehnbarkeit der Festigkeitsträger (7) ist derart gewählt, daß diese in der Mitte der Aufstandsfläche (20) des Gürtelreifens (1) aufgrund der Abplattung etwa bis auf die Kreislinie rückgeformt werden, welche sie im spannungslosen Zustand bzw. bei nicht aufgeblasenem Gürtelreifen (1) einnehmen würden. Somit werden die Festigkeitsträger (7) des Umfangsgürtels (6) durch die Abplattung des Reifens (1) bis in den spannungslosen Zustand entspannt, nicht aber gestaucht.

Durch die Erfindung werden Gürtelkonstruktionen mit unzureichender Quersteifigkeit in einfacher und wirksamer Weise verbessert, so daß die Festigkeitsträger des Gürtels in Null-Grad-Lage angeordnet sein können. Da bei einer derartigen Anordnung die Festigkeitsträger (7) des Umfangsgürtels voll für deren eigentliche Aufgabe, nämlich für die Umfangsfestigkeit zu sorgen, genutzt werden können, läßt sich der tragende Querschnitt des Gürtels und damit dessen Gewicht insgesamt reduzieren. Die Festigkeitsträger (8a) des Quergürtels (8) sind sozusagen homogen in das Gummimaterial des Luftreifens eingeschweißt oder integriert und bilden zusätzlich zu der Queraussteifung auch eine Durchdringungssperre gegen Fremdkörper, insbesondere wenn der Quergürtel (8) zwischen Lauffläche (5) und Umfangsgürtel (6) des Reifens angeordnet ist.

Es hat sich erwiesen, wenn ein Teil des Umfangsgürtels beispielsweise aus Nylon-Cordfäden oder auf ähnliche Weise elastisch dehnbar ausgebildet wird, während ein weiterer Teil des Umfangsgürtels beispielsweise aus möglichst undehnbarem Material wie Aramid- oder Glasfaser-Cordfäden oder in ähnlicher Weise "schlaff" hergestellt wird, d.h. mit einer auf die Konstruktion zurückführbaren verfügbaren Dehnung, die mindestens so groß ist wie die Umfangsänderung bei der Bombage des Reifens in der Reifenpresse.

Durch den materialtypischen Heißschrumpf des Nylons erhält der fertige Reifen bei dieser Ausführungsform einen kleineren Umfang, der in Folge der Betriebsbedingungen durch elastische Dehnung des Nylon-Materials so weit zunimmt, wie dies die dehnungssteifen Teile des Umfangsgürtels zulassen.

Hierbei übernimmt zunächst das dehnbare Nylon-Material unter Speicherung entsprechender Gegenkräfte, d.h. also ähnlich wie eine Feder, die auftretenden Zugspannungen, bis schließlich nach Erreichen der konstruktiv gewünschten Dehnung von beispielsweise 3 bis 5 % die hochfesten, dehnungssteifen Cordfäden die weitere Zugspannung auffangen. Die so erzielte anschlagartige Begrenzung des Umfangwachstumes des Reifens wirkt sich auch sehr vorteilhaft auf die Seitensteifigkeit des Quergürtels aus, da hierdurch partielle Verzerrungen, wie sie bei Schräglauf durch zusätzliche örtliche Überdehnungen eines unbegrenzt dehnbaren Gürtels auftreten können, unterbunden werden.

## Patentansprüche

1. Gürtelreifen für Fahrzeuge, mit einem torusförmig gewölbten Körper (2) aus elastischem Material wie vulkanisiertem Kautschuk oder kautschukartigem Material mit einer Lauffläche (5) am Außenumfang, mit einer sich in Umfangsrichtung erstreckenden ringförmigen Gürtelkonstruktion, die einen im Bereich der Lauffläche im elastischen Material des Körpers eingebetteten Umfangsgürtel (6) aufweist, der eine Anzahl von in wenigstens einer Ebene angeordneten ringförmigen Festigkeitsträgern (7), die sich in Umfangsrichtung des Körpers (2) erstrecken, enthält, wobei die ringformige Gürtelkonstruktion in Umfangsrichtung derart dehnbar ist, daß dies etwa der im Bereich der Aufstandsfläche des Reifens sich ergebenden Rückverformung entspricht,
**dadurch gekennzeichnet,**
a) daß die ringförmige Gürtelkonstruktion aus zwei Teilen, nämlich dem Umfangsgürtel (6) zur Erhöhung der Umfangssteifigkeit und einem Quergürtel (8) zur Erhöhung der Seitensteifigkeit mit wenigstens einem Queraussteif-Festigkeitsträger (8a), der sich etwa über die Breite der Lauffläche (5) erstreckt und parallel und im Abstand zu den sich in Umfangsrichtung erstreckenden Festigkeitsträgern (7) des Umfangsgürtels (6) im elastischen Material eingebettet ist und der in Umfangsrichtung des Reifens (1) mindestens so stark wie die Festigkeitsträger (7) des Umfangsgürtels (6) streckbar ist, besteht,
b) daß die ringförmigen Festigkeitsträger (7) des Umfangsgürtels (6) in ihrer Längsrichtung 3 bis 5 % dehnbar sind
c) und daß der Umfangsgürtel (6) dehnbare kürzere und dehnungssteife, etwas längere, zunächst schlaff eingebaute Cordfäden aufweist, damit der Umfangsgürtel nach Erreichen der konstruktiv gewünschten Dehnung von 3 bis 5 % durch die dehnungssteifen längeren Cordfäden anschlagartig gegen weitere Dehnung geschützt ist.

2. Gürtelreifen nach Anspruch 1, dadurch gekennzeichnet, daß die Fostigkeitsträger (8a) des Quergürtels (8) in wenigstens einer Lage über und/oder unter den Festigkeitsträgern (7) des Umfangsgürtels (6) angeordnet sind.

3. Gürtelreifen nach Anspruch 1 oder 2, dadurch gekennzeichnet, daß der Quergürtel (8) aus wenigstens einer in Umfangsrichtung des Reifens (1) ringförmig gelegten Kunststoff-Folie besteht, die quer zu den Festigkeitsträgern (7) des Umfangsgürtels (6) gewellt ist.

4. Gürtelreifen nach Anspruch 3, dadurch gekennzeichnet, daß der Quergürtel (8) aus mehreren ringförmig nebeneinander angeordneten, in das Material des Reifenkörpers (2) eingebetteten gewellten Bändern (8a) besteht.

5. Gürtelreifen nach Anspruch 1 oder 2, dadurch gekennzeichnet, daß die festigkeitsträger (8a) des Quergürtels (8) dünne und schmale Bänder oder Streifen endlicher Lange sind, die sich im wesentlichen Quer zum Umfangsgürtel (6) erstrecken und in gleichförmigem gegenseitigen Abstand parallel nebeneinander über den Umfang des Reifens (1) verteilt in diesem angeordnet sind.

6. Gürtelreifen nach Anspruch 5, dadurch gekennzeichnet, daß zwischen benachbarten band- oder streifenförmigen Festigkeitsträgern (8a) des Quergürtels (8) aus Gummimaterial bestehende Brücken (8b) vorgesehen sind, die im wesentlichen rechtwinklig zu den Festigkeitsträgern (7) des Umfangsgürtels (6) sich erstrecken.

7. Gürtelreifen nach Anspruch 5 oder 6, dadurch gekennzeichnet, daß die band- oder streifenförmigen Festigkeitsträger (8a) des Quergürtels (8) jeweils aus Kunststoff bestehen, der sich mit Kautschuk bzw. dem Gummimaterial des Reifens (1) chemisch verbindet, beispielsweise über freie Doppelbindungen, und der bis mindestens 190°C formbeständig ist.

8. Gürtelreifen nach einem der Ansprüche 1 bis 7, dadurch gekennzeichnet, daß die Festigkeitsträger (8a) des Quergürtels (8) aus Kunststoff bestehen, der ein ähnliches oder gleiches spezifisches Gewicht wie das Gummimaterial des Reifenkörpers (2) hat.

9. Gürtelreifen nach einem der Ansprüche 1 bis 8, dadurch gekennzeichnet, daß die Queraussteifelemente (8a) aus Poly-(2,6-dimethyl-1,4-phenylenäther) bzw. entsprechenden PPE-Legierungen bestehen und das anschließende Kautschukmilieu Styrol wie SBR (styrol butadiene rubber) enthält.

10. Gürtelreifen nach einem der Ansprüche 1 bis 9, dadurch gekennzeichnet, daß die Festigkeitsträger (7) des Umfangsgürtels (6) in der Null-Grad-Lage angeordnet sind.

## Claims

1. A belted tyre for vehicles, with a toroidally curved body (2) of elastic material, such as vulcanised rubber or rubbery material, with a tread surface (5) on the outer circumference, with a circumferentially extending annular belt construction, which has in the vicinity of the tread circumferential belt (6) embedded in the elastic material of the body and containing a plurality of annular strength supports (7), which are arranged in at least one plane and extend in the circumferential direction of the body (2), whereby the annular belt structure is so extensible in a peripheral direction that it corresponds substantially to the re-formation which occurs in the region of the tread of the tyre, characterized in that
a) the annular belt construction comprises two parts, namely the circumferential belt (6) for increasing the circumferential rigidity and a transverse belt (8) for increasing the lateral rigidity with at least one transverse stiffening strength support (8a), which extends roughly over the width of the tread surface (5) and is embedded parallel to and spaced from the circumferentially extending strength supports (7) of the circumferential belt (6) in elastic material and which in the circumferential direction of the tyre (1) can be stretched by at least the same amount as the strength supports (7) of the circumferential belt (6),
b) and in that the annular strength supports (7) of the circumferential belt (6) are extensible by 3 to 5% in their longitudinal direction,
c) and in that the circumferential belt (6) comprises extensible shorter and extensibly rigid and somewhat longer initially slag cord threads so that the circumferential belt, once it reaches the structurally desired extension of 3 to 5%, is protected by the extensibly rigid longer cord threads against further elongation.

2. A belted tyre according to claim 1, characterized in that the strength supports (8a) of the transverse belt (8) are arranged in at least one layer over and/or under the strength supports (7) of the circumferential belt (6).

3. A belted tyre according to claim 1 or 2, characterized in that the transverse belt (8) comprises at least one plastic layer placed round in annular form in the circumferential direction of the tyre (1) and which is corrugated at right angles to the strength supports (7) of the circumferential belt (6).

4. A belted tyre according to claim 3, characterized in that the transverse belt (8) comprises several annularly juxtaposed, corrugated strips (8a) embedded in the material of the tyre body (2).

5. A belted tyre according to claim 1 or 2, characterized in that the strength supports (8a) of the transverse belt (8) are thin, narrow strips or bands of finite length, which substantially extend at right angles to the circumferential belt (6) and are distributed with a uniform reciprocal spacing and in parallel, juxtaposed form over the circumference of the tyre (1).

6. A belted tyre according to claim 5, characterized in that between adjacent band or strip-like strength supports (8a) of the transverse belt (8) are provided rubber material bridges (8b), which extend substantially at right angles to the strength supports (7) of the circumferential belt (6).

7. A belted tyre according to claim 5 or 6, characterized in that the band or strip-like strength supports (8a) of the transverse belt (8) are in each case of plastic, which is chemically connected to the rubber material of the tyre (1), e.g. by means of free double bonds and which is dimensionally stable up to at least 190°C.

8. A belted tyre according to one of claims 1 to 7, characterized in that the strength supports (8a) of the belted tyre (8) are of plastic, which has a similar or identical specific gravity to the rubber material of the tyre body (2).

9. A belted tyre according to one of claims 1 to 8, characterized in that the transverse stiffening elements (8a) are of poly-(2,6-dimethyl-1,4-phenylene ether) or suitable PPE-containing composition and that the connecting rubber medium contains styrene such as SBR (styrene butadiene rubber).

10. A belted tyre according to one of claims 1 to 9, characterized in that the strength supports (7) of the circumferential belt (6) are arranged in the 0° layer.

## Revendications

1. Pneumatique à ceinture pour véhicules, présentant un corps (2), bombé en forme de tore, en matériau élastique comme du caoutchouc vulcanisé ou du matériau du type caoutchouc, présentant une surface de roulement (5) à la périphérie extérieure, présentant une construction de ceinture annulaire qui s'étend dans la direction périphérique et qui présente une ceinture périphérique (6) qui est enrobée, dans la zone de la surface de roulement, dans un matériau élastique du corps et qui contient un certain nombre de supports annulaires de résistance (7) qui sont disposés dans au moins un plan et qui s'étendent dans la direction périphérique du corps (2), pneumatique, la construction annulaire de ceinture pouvant s'allonger selon la direction périphérique de façon telle que ceci correspond à peu prés à la déformation discontinue qui apparaît dans la zone de la surface d'appui au sol du pneumatique, caractérisé
a) par le fait que la construction annulaire de ceinture est constituée de deux parties, à savoir la ceinture périphérique (6) pour accroître la rigidité périphérique et une ceinture transversaie (8) qui est prévue pour accroître la rigidité transversaie, qui comporte au moins un support de résistance (8a) qui renforce la rigidité transversale, qui s'étend à peu près sur la largeur de la surface de roulement (5), qui est enrobée dans le matériau élastique, parallèlement et à une certaine distance des supports de résistance (7) de la ceinture périphérique (6) s'étendant en direction périphérique, et qui, dans la direction périphérique de pneumatique (1), peut s'étirer au moins autant que le support de résistance (7) de la ceinture périphérique (6),
b) par le fait que les supports annulaires de résistance (7) de la ceinture périphérique (5) peuvent s'allonger de 3 à 5 % selon leur direction longitudinale,
c) et par le fait que la ceinture périphérique présente des cordes plus courtes, pouvant s'allonger et d'autres, un peu plus longues, tout d'abord incorporées lâches, afin qu'après avoir atteint l'allongement désiré de construction, de 3 à 5 %, la ceinture périphérique soit brusquement, par les cordes plus longues, qui ne s'allongent pas, protégée à l'égard de la poursuite de l'allongement.

2. Pneumatique à ceinture selon la revendication 1, caractérisé par le fait que les supports de résistance (8a) de la ceinture transversale (8) sont disposés à au moins une position située au-dessus et/ou au-dessous des supports de résistance (7) de la ceinture périphérique (6).

3. Pneumatique à ceinture selon la revendication 1ou 2, caractérisé par le fait que la ceinture transversaie (8) est constituée d'au moins une feuille de plastique qui est posée, sous forme d'un anneau, dans la direction périphérique du pneumatique (1) et qui est ondulée transversalement aux supports de résistance (7) de la ceinture périphérique (6).

4. Pneumatique à ceinture selon la revendication 3, caractérisé par le fait que la ceinture transversale (8) est constituée de plusieurs bandes ondulées (8a) disposées l'une à côté de l'autre en forme d'anneau et enrobées dans le matériau du corps du pneumatique (2).

5. Pneumatique à ceinture selon la revendication 1 ou 2, caractérisé par le fait que les' supports de résistance (8a) de la ceinture transversale (8) sont des bandes ou des rubans minces et étroits qui s'étendent sensiblement transversalement à la ceinture périphérique (6) et sont disposés les uns à côté des autres, parallèlement à et à distance mutuelle régulière, sur la périphérie du pneumatique (1) et répartis sur cette périphérie.

6. Pneumatique à ceinture selon la revendication 5, caractérisé par le fait qu'entre les supports de résistance en forme de bande ou de ruban (8a), voisins, de la ceinture transversale (8) sont prévus des ponts (8b) qui sont constitués de matériau du type caoutchouc et qui s'étendent sensiblement perpendiculairement aux supports de résistance (7) de la ceinture périphérique (6).

7. Pneumatique à ceinture selon la revendication 5 ou 6, caractérisé par le fait que les supports de résistance (8a), en forme de bande ou de ruban, de la ceinture transversale (8) sont respectivement constitués de plastique qui s'allie chimiquement au caoutchouc naturel ou au caoutchouc synthétique du pneumatique (1), par exemple par l'intermédiaire de doubles liaisons libres, et qui présente une stabilité de forme jusqu'au moins 190°C.

8. Pneumatique à ceinture selon l'une des revendications 1 à 7, caractérisé par le fait que les supports de résistance (8a) de la ceinture transversale (8) sont fabriqués en un plastique qui a un poids spécifique analogue ou égal a celui du matériau de type caoutchouc du corps du pneumatique (2).

9. Pneumatique à ceinture selon l'une des revendications 1 à 8, caractérisé par le fait que les éléments (8a) qui renforcent la rigidité sont constitués de polyéther de (2,6-diméthyl-1,4-phénylène) ou d'alliages de PPE correspondants et par le fait que le milieu de type caoutchouc, voisin, contient du styrène comme le caoutchouc SBR (styrène butadiène).

10. Pneumatique à ceinture selon l'une des revendications 1 à 9, caractérisé par le fait que les supports de résistance (7) de la ceinture périphérique (6) sont disposés dans la position de degré zéro.
